# EUROPÄISCHE PATENTSCHRIFT

(11) **EP 2 909 287 B1**
(45) Veröffentlichungstag und Bekanntmachung des Hinweises auf die Patenterteilung: **14.09.2016**
(21) Anmeldenummer: 12794901.4
(22) Anmeldetag: 16.11.2012
(51) Int. Cl.: C10B 47/46, C10B 53/07, C10G 1/10

(54) **VORRICHTUNG UND VERFAHREN ZUR STOFFLICHEN BEHANDLUNG VON ROHSTOFFEN**
APPARATUS AND METHOD FOR MATERIAL TREATMENT OF RAW MATERIALS
DISPOSITIF ET PROCÉDÉ DE TRAITEMENT PHYSIQUE DE MATIÈRES PREMIÈRES

(30) Priorität: 16.10.2012 DE 102012109874
(43) Veröffentlichungstag der Anmeldung: 26.08.2015
(73) Patentinhaber: Merenas Trust Reg., 9490 Vaduz (LI)
(72) Erfinder: ABFALTERER, Alexander, FL-9490 Vaduz (LI)
(74) Vertreter: Sperling, Thomas
(86) Internationale Anmeldenummer: PCT/EP2012/072896
(87) Internationale Veröffentlichungsnummer: WO 2014/060052

(56) Entgegenhaltungen:
- WO-A1-2007/053088
- WO-A2-2010/012275
- DE-A1- 10 348 987
- JP-A- S56 109 282

## Beschreibung

Die Erfindung betrifft eine Vorrichtung zur stofflichen Behandlung von Rohstoffen. Die Vorrichtung weist ein Heizsystem, eine Destillationseinheit und eine Reaktionseinheit auf. Die Reaktionseinheit ist mit den Rohstoffen zur Behandlung beschickbar ausgebildet. Das Heizsystem kann zur Bestückung mit der Reaktionseinheit geöffnet und geschlossen werden. Die Vorrichtung wird auch als Verschwelungs-Destillations-Industriemodul VDI bezeichnet.
Des Weiteren betrifft die Erfindung ein Verfahren zum Betreiben einer Vorrichtung zur stofflichen Behandlung von Rohstoffen.

Die Vorrichtung ist für die industrielle Behandlung, insbesondere von Altgummiprodukten, Gummierzeugnissen oder gummiähnlichen Verbunderzeugnissen, wie Altreifen, stahlseilbewehrten Gummigurten, gummierten Kettengliedern und Förderbändern, sowie von zerkleinerten Altfahrzeugen, von organischen nachwachsenden Rohstoffen, wie Holz, von verseuchten anorganischen Kohlenstoffen und verseuchten Böden vorgesehen. Dabei werden leichtes Rohöl, Gas, Metalle, insbesondere Stahl, und anorganischer Kohlenstoff gewonnen.

Aus dem Stand der Technik bekannte Anlagen basieren auf der Verwendung von Drehrohröfen, Wirbelbettreaktoren sowie Trommeln und arbeiten mit verdichtetem Ausgangsmaterial beziehungsweise unter chemisch inerter Atmosphäre unter Ausschluss von Sauerstoff.

Aus der DE 695 11 626 T2 geht ein Ofen zur thermischen Behandlung fester Materialien hervor. Der Ofen weist ein Drehelement, in welchem die festen Materialien zirkulieren, und ein Heizmittel auf. Das koaxial und im Inneren des Drehelementes angeordnete feste Heizmittel ist derart ausgebildet, die Feststoffmaterialien zu kanalisieren und deren Vorwärmung und/oder Erwärmung sicherzustellen.

In der DE 199 30 071 C2 werden ein Verfahren und eine Vorrichtung zur Verwertung von organischen Stoffen und Stoffgemischen beschrieben. Das organische Material wird dabei mit Wirbelbettmaterial der Verbrennungswirbelschicht in Kontakt gebracht. Bei dem Verfahren entstehen Endprodukte in Form von Gasen mit kondensierbaren Substanzen und kohlenstoffhaltige Rückstände.

Die DE 44 41 423 A1 offenbart ein Verfahren und eine Vorrichtung zur Gewinnung von verwertbarem Gas aus Müll. Dabei wird der zerkleinerte Müll in eine gasdicht abgeschlossene Trommel eingebracht. In der Trommel wird Gas erzeugt und vom gleichzeitig gebildeten Reststoff abgetrennt. Das erzeugte Gas wird in einem Gaswandler unter Zufuhr von Luft und in Gegenwart eines glühenden Koksbettes zu einem Spaltgas gespalten. Die im Verfahren benötigte Wärme wird durch ein Gas in direktem Kontakt mit dem zu verwertenden Gut übertragen. Für die Übertragung der Wärme auf das Gas wird ein Teilstrom des aus dem Gaswandler austretenden Spaltgases genutzt.

Mit der DE 41 26 319 A1 wird ein Verfahren zur Verwertung von Silikonkautschukvulkanisaten gezeigt, bei welchem die Vulkanisate auf 350°C bis 700°C erhitzt und die dabei entstehenden flüchtigen Siloxane kondensiert werden. Als Produkte entstehen insbesondere Siloxane und Füllstoffe.

Aus der DE 40 11 945 C1 geht ein Verfahren zur Entgasung von organischen Substanzen, wie beispielsweise Haus-, Industriemüll und dergleichen, in einer beheizbaren Kammer hervor. Bei dem Verfahren werden die Ausgangsstoffe unter Verdichtung in die Kammer eingebracht und durchlaufen unter Beibehaltung des verdichteten Zustandes den Kammerquerschnitt. Die Wärmezufuhr erfolgt über die mit dem verdichteten Gut in Druckkontakt stehenden Kammerwandungen. Die sich bildenden gasförmigen Produkte werden bei erhöhtem Druck abgeführt. Die Kammer ist in ihrem Beschickungsbereich durch das verdichtete Gut gasdicht verschlossen. Durch Nachverdichtung der festen Reststoffe wird im Abströmbereich der gasförmigen Produkte ein erhöhter Strömungswiderstand erreicht.

In der DE 39 32 803 A1 wird ein Reaktionsverfahren von organischen Materialien unter Zusatz von Borsäure/Boroxid und organischen Stickstoffverbindungen in nichtoxidierender Atmosphäre oder im Vakuum zu Kohle und Graphit offenbart.
Für das Betreiben herkömmlicher Anlagen sind erhöhte Aufwendungen für Material, Energie und Logistik erforderlich.
Durch die Nutzung von Schutzgasen, das heißt nicht oxidierender Atmosphäre, fällt zum Beispiel die Durchsatzleistung bei vergleichbaren Einheiten gering aus. Die Erzeugung einer Wirbelschicht bei Wirbelbettreaktoren bedingt einen erhöhten Energieaufwand, da einerseits die Wirbelschicht erzeugt und erhalten werden muss und anderseits die zu verwertenden Materialien mechanisch so aufgearbeitet werden müssen, dass sie mit der Wirbelschicht wirksam kontaktieren.
Bedingt durch das Verdichten der Ausgangsstoffe in der Vorbereitung und während des Verwertungsvorgangs fallen ebenfalls hohe Energiekosten an.

In der WO 2007/053088 A1 wird ein Verfahren sowie eine Vorrichtung zur Behandlung von Materialien aus Kohlenwasserstoffen beschrieben. Die Materialien werden in einen inneren Behälter beschickt, welcher wiederum in einem äußeren Behälter anordenbar ist. Beide Behälter werden jeweils mit einem Deckelelement verschlossen. Das Kohlenwasserstoff-Material wird mittels Mikrowellen oder hochfrequenter Bestrahlung erwärmt. Die entstehenden Abgase werden durch einen Gasauslass aus den Behältern abgeführt. Es können zwei oder mehr Behälter parallel betrieben und an einer Gasreinigungsanlage angeschlossen werden, um einen nahezu kontinuierlichen Gasstrom durch die Gasreinigungsanlage aufrechtzuerhalten.

Aus der JP S56 109282 A gehen eine Vorrichtung und ein Verfahren zur thermischen Zersetzung von Abfall, wie PVC, hervor. Eine thermische Zersetzungskammer wird mit dem PVC-haltigen Abfall bestückt. Ein Brenner ermöglicht die Energiezufuhr zur thermischen Zersetzung des Abfalls. Das bei der Zersetzung anfallende Gas wird durch eine Gasleitung in einen Gastank verbracht, wobei ein beweglicher Behälter entsprechend der zugeführten Gasmenge in vertikaler Richtung verschiebbar ist.

Die WO 2010/012275 A2 offenbart eine Vorrichtung zur Behandlung von Materialien mit einem zylinderförmigen Ofen sowie eine Steuerung des Prozesses. Die Innenflächen des Ofens sind mit einer Isolierschicht aus einem anorganischen Wärmedämmstoff versehen. Auf oder an den Innenflächen der Isolierschichten sind Heizelemente angeordnet. Die Steuerung des Prozesses über eine Regelung der Temperatur der Heizelemente dient einer hohen Ausbeute an Kohlenstoff oder Feinruß, Öl und Brenngas.

Aufgabe der vorliegenden Erfindung ist es, eine Vorrichtung und ein Verfahren zur Behandlung unterschiedlicher Altgummiprodukte; Gummi- oder gummiähnlicher Verbunderzeugnisse zur Verfügung zu stellen. Dabei sollen die Verbunderzeugnisse getrennt und werthaltige Komponenten, wie Kohlenstoff, leichtes Rohöl, Gas und gegebenenfalls metallische Materialien rückgewonnen werden. Die Vorrichtung soll konstruktiv einfach aufgebaut und kostengünstig realisierbar sein.

Die Aufgabe wird durch eine erfindungsgemäße Vorrichtung zur stofflichen Behandlung von Rohstoffen gelöst. Die Vorrichtung weist ein Heizsystem, eine Destillationseinheit und eine Reaktionseinheit auf. Die Reaktionseinheit ist mit den Rohstoffen beschickbar ausgebildet. Das Heizsystem ist zur Bestückung mit der Reaktionseinheit öffenbar und verschließbar.
Nach der Konzeption der Erfindung umfasst das Heizsystem ein Kopfelement und ein fest mit dem Kopfelement verbunden ausgebildetes Mantelelement sowie Stützelemente. Das Kopfelement ist an den in vertikaler Richtung in der Länge veränderbaren Stützelementen gehaltert angeordnet. Durch die Veränderung der Länge der Stützelemente zwischen zwei Endpositionen wird das Heizsystem in vertikaler Bewegungsrichtung geöffnet und geschlossen.

Nach einer vorteilhaften Ausgestaltung der Erfindung weist das Heizsystem zwei Stützelemente auf. Die Stützelemente sind dabei bevorzugt beiderseits des Heizsystems angeordnet. Nach einer ersten Alternative werden die Stützelemente mit Elektrospindeln angetrieben. Nach einer zweiten Alternative sind die Stützelemente als Hydraulikstützen ausgebildet.

Nach einer Weiterbildung der Erfindung ist das Mantelelement mit einer hohlzylinderförmigen Wandung ausgebildet. Die Wandung ist in vertikaler Richtung nach unten geöffnet und nach oben mit einer kreisrunden Haube verschlossen. Das Mantelelement ist an der Haube mit dem Kopfelement zu einer Einheit verbunden.
Das Mantelelement weist vorteilhaft gleichmäßig am Umfang der inneren Fläche der Wandung verteilt angeordnete Brennrohre auf. Die Wandung weist zudem zur Verhinderung des Wärmeüberganges zur Umgebung nach außen eine Wärmeisolierung aus Keramikpulver auf.

Nach einer bevorzugten Ausgestaltung der Erfindung ist die Haube am Mittelpunkt mit einem Abgasstutzen als Verbindung zu einer Abgasleitung ausgebildet. Die Abgasleitung erstreckt sich dabei vom Abgasstutzen durch die Haube hindurch in das Kopfelement des Heizsystems.

Die Abgasleitung weist am distalen Ende zum Abgasstutzen der Haube vorteilhaft ein Verbindungselement als Verbindung mit einer Abgasleitung der Destillationseinheit auf.

Nach einer weiteren Ausgestaltung der Erfindung ist die Reaktionseinheit mit einer Wandung in Form eines hohlzylindrischen Gefäßes, welches am Boden verschlossen ist, ausgebildet. Die offene Seite der Wandung ist mittels eines Deckelelementes verschließbar.
Zwischen der Wandung und dem Deckelelement ist vorteilhaft eine hochtemperaturbeständige Dichtung angeordnet.

Das Deckelelement der Reaktionseinheit ist bevorzugt kreisrund ausgebildet und weist am Mittelpunkt einen Abgasstutzen auf. Von besonderem Vorteil ist, dass der Abgasstutzen des Deckelelementes und der Abgasstutzen des Mantelelementes im geschlossenen Zustand des Heizsystems ineinander greifen und eine dichte Verbindung zur Abgasleitung ausbilden.

Nach einer vorteilhaften Ausgestaltung der Erfindung weist die Reaktionseinheit im Inneren Siebelemente auf. Die Siebelemente sind dabei horizontal ausgerichtet und in unterschiedlichen Höhen, beabstandet zueinander angeordnet. Die Siebelemente bedecken bevorzugt den gesamten Querschnitt der Reaktionseinheit.

Das erfindungsgemäße Verfahren zum Betreiben der Vorrichtung zur stofflichen Behandlung von Rohstoffen umfasst folgende Schritte:
- Beschicken einer Reaktionseinheit mit Rohstoffen,
- Vorwärmen der Reaktionseinheit,
- Öffnen eines Heizsystems und Verbringen der Reaktionseinheit auf ein Bodenelement des Heizsystems,
- Verschließen des Heizsystems, sodass die Reaktionseinheit in einem abgeschlossenen Raum angeordnet ist,
- Erwärmen der Reaktionseinheit und Starten eines Verschwelungs- und Destillationsprozesses,
- Abführen entstehender Gase aus der Reaktionseinheit in eine Destillationseinheit,
- Abkühlen und Kondensieren der Gase in der Destillationseinheit,
- Einleiten der Destillationsprodukte in einen Öltank und Abscheiden von Öl,
- Überführen nichtkondensierbarer Gase vom Öltank in einen Gasfiltertank und Filtern der Gase,
- Öffnen des Heizsystems und Entnehmen der Reaktionseinheit aus dem Heizsystem,
- Abkühlen der Reaktionseinheit, Entnehmen der Endprodukte aus der Reaktionseinheit und Trennen der Endprodukte sowie
- Entnehmen der Endprodukte aus dem Öltank und dem Gasfiltertank,
wobei das Heizsystem durch Ausfahren und Einfahren von Stützelementen geöffnet und geschlossen wird.

Nach einer besonders vorteilhaften Ausgestaltung der Erfindung werden beim Verschließen des Heizsystems ein Abgasstutzen der Reaktionseinheit mit einem Abgasstutzen einer Abgasleitung des Heizsystems sowie an einem Verbindungselement die Abgasleitung des Heizsystems und eine Abgasleitung der Destillationseinheit miteinander gekoppelt. Damit wird vorteilhaft eine gasdichte Verbindung von der Reaktionseinheit zur Destillationseinheit hergestellt.

Das Verfahren wird bevorzugt mit mindestens vier Reaktionseinheiten gleichzeitig und folgenden Schritten modular betrieben:
- Beschicken einer ersten Reaktionseinheit, während eine zweite Reaktionseinheit, welche bereits beschickt ist, vorgewärmt wird,
- Zuführen einer dritten, beschickten und vorgewärmten Reaktionseinheit dem Heizsystem und Erwärmen der Reaktionseinheit zum Durchführen des Verschwelungs- und Destillationsprozesses sowie
- Abkühlen und Entleeren einer vierten Reaktionseinheit, in welcher der Verschwelungs- und Destillationsprozess beendet ist.

Nach einer Weiterbildung der Erfindung wird die Reaktionseinheit mit Rohstoffen einer Masse im Bereich von 2,5 t bis 3 t beschickt. Die Reaktionseinheit verbleibt vorteilhaft für eine Dauer in einem Bereich von etwa 2,5 h bis 3,5 h im Heizsystem. Die Reaktionstemperatur innerhalb der Reaktionseinheit beträgt bevorzugt zwischen 350°C und 650°C, wobei eine Energie im Bereich von 40 kWh pro Stunde verbraucht wird.

Das erfindungsgemäße Verfahren basiert auf einem Verschwelungs-Destillations-Prozess, sodass es sich bei der erfindungsgemäßen Vorrichtung um ein Verschwelungs-Destillations-Industriemodul, auch als VDI-Modul bezeichnet, handelt.

Zur effektiven Durchführung des Verfahrens wurde die Vorrichtung auf die Ausbildung mit Modulen gestützt, um damit den Durchsatz zu optimieren beziehungsweise zu maximieren sowie an den aktuellen Bedarf anpassen zu können.

Weitere Vorteile des Verschwelungs-Destillations-Industriemoduls gegenüber dem Stand der Technik lassen sich folgendermaßen zusammenfassen:
- keine Vorsortierung der Rohstoffe,
- Behandlung von
   - Altgummiprodukten, wie Altreifen, gummierten Kettengliedern, stahlseilbewehrten Gummigurten und Förderbändern, wobei die Produkte, um deren Struktur zu erhalten, in ihrer Ausgangsform behandelbar sind und nicht zerkleinert beziehungsweise geschreddert werden müssen,
   - organischen und nachwachsenden Rohstoffen, zum Beispiel Holz in allen Formen, insbesondere Buchen und Eichen,
   - verseuchten anorganischen Kohlenstoffen,
   - Reaktivierung von Aktivkohle nach Einsatz sowie
   - verseuchten Böden, verseuchtem Wasser oder anderen Materialien, zum Beispiel nach Ölhaverien, und
   - zerkleinerten beziehungsweise geschredderten Altfahrzeugen.
- ökologische, ökonomische sowie kohlenstoffdioxidfreie und damit nachhaltige Technologie mit sehr geringem Energieverbrauch.

Weitere wesentliche Vorteile sind, dass die bisher nur mit energetisch hohem Aufwand trennbaren Stahl-Gummi-Verbunde ohne wesentliche Inanspruchnahme von Fremdenergie trennbar sind. Die entstehenden Produkte sind im Sinne einer effizienten Kreislaufwirtschaft wieder einer hochwertigen Nutzung zuführbar, welche dazu beiträgt, Ressourcen zu schonen. Zudem erschließen sich zum Teil vollkommen neuartige Anwendungsbereiche der durch das Verfahren gewonnenen Materialien, wobei die entstehenden Produkte auf unterschiedlichen prozentualen Verteilungen beruhen, welche wiederum auf den unterschiedlich eingesetzten Rohstoffen basieren. Zu den entstehenden Produkten zählen:
- leichtes Rohöl, beispielsweise mit einer Dichte von etwa 927 kg/m³ bei 15°C, einer Viskosität von 4,74 mm²/s und einem Flammpunkt unter 21°C,
- Gas,
- Metalle, überwiegend Stahl beziehungsweise Eisen und Titan, sowie
- anorganischer Kohlenstoff.

Der Kohlenstoff weist je nach Ausgangsrohstoff einen Reinheitsgrad im Bereich von 95 % bis 99,9 % mit einer BET-Oberfläche im Bereich von 1.500 m²/g BET bis 2.500 m²/g BET ein sehr hohes Adsorptionsvermögen ohne Abgabe von Substanzen an die Umwelt auf. Damit wird die Umwelt, zum Beispiel durch Auswaschungen, nicht belastet.

Als Anwendungsgebiete können beispielhaft aufgezählt werden:
- leichtes Rohöl
   - in der chemischen Industrie und in der Pharmaindustrie,
   - zur Erzeugung von thermischer Energie und Elektroenergie zum Beispiel mittels eines BHKW,
- Gas
   - zur Erzeugung von thermischer Energie und Elektroenergie zum Beispiel mittels Gasturbine und Generator oder zur Rückführung und Nutzung im Prozess,
- Stahl
   - in der Stahlindustrie - durch sehr geringe Prozesstemperaturen bleiben alle Metalle in ihren physikalischen und chemischen Eigenschaften erhalten,
- anorganischer Kohlenstoff
   - in der Lebensmittelindustrie und in der Medizin,
   - zum Einsatz in Entkalkungssystemen,
   - zur Diamantenherstellung,
   - zur Herstellung von Akkumulatoren und Speichersystemen für elektrische Energie,
   - als Füllstoff für Kautschuk bei der Gummi- und Reifenherstellung,
   - im Flugzeugbau und
   - in der Bauindustrie.

Der Kohlenstoff kann als Aktivkohle beispielsweise als Filter zur Wasseraufbereitung oder zur Gasreinigung in Abluftanlagen eingesetzt werden. Mit Hilfe der Filter lässt sich vorteilhaft Salzwasser in Süßwasser umwandeln und Öl, Benzin oder Säure aus Wasser ausfiltern.

Das Einbringen des Kohlenstoffes in Wasser verbessert zudem die Wasserqualität bezüglich des Sauerstoffgehaltes - es fördert den Sauerstoffaustausch, zum Beispiel beim Einsatz in einem Aquarium. Ein weiterer Vorteil liegt darin, dass beispielsweise Koli-Bakterien erst bei erhöhten Temperaturen des Wassers von etwa 36°C bis 38°C und darüber aktiv werden. Bei Temperaturen unterhalb des angegebenen Bereiches werden dagegen keine Koli-Bakterien gebildet.
Aufgrund seiner Eigenschaften ist der Kohlenstoff zur Ölbekämpfung geeignet. Der Kohlenstoff schwimmt auf der Wasseroberfläche auf und bindet auf dem Wasser befindliches Öl, wie es zum Beispiel bei Seeunfällen auftreten kann. Gleichfalls ist es aber auch zur Säuberung von mineralölverseuchten Böden, das heißt bei Bodenkontaminationen, oder bei anderen Ölschadensfällen beziehungsweise kontaminierten Stoffe einsetzbar. Dabei nimmt Filtermaterial mit einer Masse von 2 kg bis zu 10 Liter Öl auf.

Ebenso wird der Kohlenstoff vorteilhaft zur Brandbekämpfung auf dem Land und im Wasser, insbesondere für die Bekämpfung von brennendem Öl, eingesetzt. Der Kohlenstoff ist somit als Löschmittel einsetzbar, wobei dem Feuer durch Abdecken mit einer entsprechenden Menge an Kohlenstoff Sauerstoff entzogen wird, sodass die Flamme erstickt.

Eine weitere Anwendung des Kohlenstoffs dient dem Brandschutz sowie der Wärmeisolierung bis 3.500°C. Unter Wärmeisolierung ist dabei auch die Isolierung bei sehr geringen Temperaturen, das heißt eine Kälteisolierung zu verstehen.
Eine Beschichtung von Glas mit Kohlenstoff führt beispielsweise zu einer Erhöhung des Feuerwiderstandes verbunden mit einer thermischen Isolationswirkung.
Eine Mischung aus Zement und Kohlenstoff im Verhältnis von 3:1 weist sehr gute Eigenschaften bezüglich des Wärmewiderstandes auf. So ist beispielsweise eine Platte aus Kohlenstoff-Zement mit einer Dicke von 1 cm bis zu Temperaturen von 1.200°C wärmeresistent.
Zudem kann der strahlenabweisende Kohlenstoff in Anlagen und Vorrichtungen mit notwendigem Strahlenschutz eingesetzt werden. Die vorteilhaften Eigenschaften, wie die Strahlungsresistenz und die Feuerresistenz, führen zum Beispiel zum Einsatz beim Bau von Umhausungen für Nuklearreaktoren.

Ein weiteres Anwendungsgebiet für den Kohlenstoff als sehr guter Wasserspeicher und Nährstoffspeicher liegt in der Bereitstellung von Wasserhaltungsschichten. Dies führt bei bewirtschafteten Flächen zu einer Wasserersparnis von 60 % bis 80 %.
Durch den Einsatz des Kohlenstoffs zum Beispiel unterhalb von Sandschichten können Wasser und Pflanzennährstoffe gespeichert und karge, minderwertige Böden als Standort für Gemüse und andere landwirtschaftliche Produkte genutzt werden. Diese Anwendung ist somit für die Urbarmachung von Wüstengebieten, im Gartenbau und in der Landwirtschaft von großem Vorteil. Der Kohlenstoff gibt dabei zudem keine Substanzen an das Wasser ab, sodass keine Belastung des Bodens und des Grundwassers durch eine Auswaschung von Schadstoffen erfolgt.

Bei einem Einsatz an Energie von etwa 2,41 GW im Jahr können je nach Verwendung der Art von Rohstoffen etwa jeweils 10,5 GW Strom und Wärme produziert werden. Dabei wird vorausgesetzt, dass das im Prozess anfallende Gas vollständig zur Strom- und Wärmegewinnung genutzt wird. Der Energieertrag kann bis auf 20,6 GW oder ein Verhältnis von 9,96 aus Energieertrag und Energieverbrauch gesteigert werden.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Figur 1:: Verschwelungs-Destillations-Industriemodul als Vorrichtung zur stofflichen Behandlung von Rohstoffen im geöffneten Zustand in Vorderansicht,
- Figur 2a:: Verschwelungs-Destillations-Industriemodul als Vorrichtung zur stofflichen Behandlung von Rohstoffen im geschlossenen Zustand in Seitenansicht sowie
- Figur 2b:: in Vorderansicht,
- Figur 3:: Schnittdarstellung des Heizsystems in geöffnetem Zustand,
- Figur 4:: Schnittdarstellung des Heizsystems in geschlossenem Zustand,
- Figur 5:: Bodenelement des Heizsystems,
- Figur 6a:: Reaktionseinheit in geschlossenem Zustand,
- Figur 6b:: Schnittdarstellung der Reaktionseinheit in geschlossenem Zustand,
- Figur 7:: Destillationseinheit,
- Figur 8:: Öltank,
- Figur 9a:: Gasfiltertank und
- Figur 9b:: Schnittdarstellung des Gasfiltertanks.

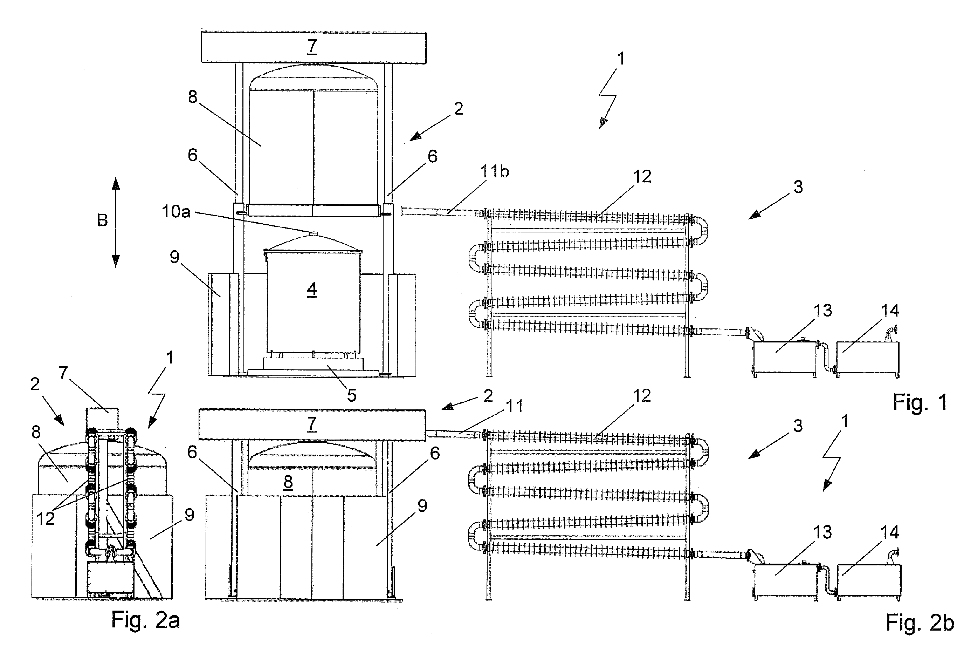

In den **Figuren 1, 2a und 2b** ist ein Verschwelungs-Destillations-Industriemodul als Vorrichtung 1 zur stofflichen Behandlung von Rohstoffen dargestellt. Figur 1 zeigt die Vorrichtung 1 im geöffneten Zustand in Vorderansicht, während aus Figur 2b die Vorrichtung 1 im geschlossenen Zustand in Vorderansicht und aus Figur 2a in Seitenansicht hervorgeht.

Die Vorrichtung 1 weist ein Heizsystem 2 sowie eine Destillationseinheit 3 auf. Die mit Rohstoffen beschickte Reaktionseinheit 4 wird in einer nicht dargestellten Vorwärmeinrichtung auf eine bestimmte Temperatur vorgewärmt und anschließend im Heizsystem 2 weiter erhitzt. Die Reaktionseinheit 4 kann dabei mit einer Mischung aus verschiedenen Rohstoffen beschickt sein, sodass keine Vorsortierung der Produkte notwendig ist. Die Reaktionseinheit 4 wird nach dem Vorwärmen in das geöffnete Heizsystem 2 verbracht und auf dem Bodenelement 5 des Heizsystems 2 positioniert.
Das Kopfelement 7 und das mit dem Kopfelement 7 fest verbundene Mantelelement 8 des Heizsystems 2 sind mittels beiderseits des Heizsystems 2 angeordneter Stützelemente 6 in der Bewegungsrichtung B beweglich gehaltert. Die Stützelemente 6 sind etwa 2,9 m zueinander beabstandet angeordnet. Das Mantelelement 8 weist einen Außendurchmesser von etwa 2,5 auf.
In der ersten Endposition gemäß Figur 1 sind die Stützelemente 6 ausgefahren. Die Vorrichtung 1 weist dabei eine Höhe von etwa 6,70 m auf. Das Kopfelement 7 und das Mantelelement 8 geben den Raum zur Bestückung des Heizsystems 2 mit der Reaktionseinheit 4 frei. Das Heizsystem 2 ist geöffnet. Die Reaktionseinheit 4 kann in das Heizsystem 2 eingebracht oder aus dem Heizsystem 2 entnommen werden. Die Bewegung der Reaktionseinheit 4 kann dabei vorteilhaft mittels eines nicht dargestellten Schienensystems erfolgen, auf welchem die Reaktionseinheit 4 aufsteht. In der zweiten Endposition gemäß den Figuren 2a, 2b sind die Stützelemente 6 eingefahren. Die Vorrichtung 1 weist dabei eine Höhe von etwa 3,70 m auf. Das Mantelelement 8 sitzt auf dem Bodenelement 5 derart auf, dass die Reaktionseinheit 4 in einem abgeschlossenen Raum positioniert ist. Das Heizsystem 2 ist geschlossen. Die Reaktionseinheit 4 ist am Boden vom Bodenelement 5 sowie an der Seitenfläche und oben vom Mantelelement 8 umgeben.
Das Heizsystem 2 weist im unteren Bereich eine Umhausung 9 auf. Die das Bodenelement 5 sowie die Seitenflächen des Mantelelementes 8 im geschlossenen Zustand des Heizsystem 2 umschließende Umhausung 9 wird zur Bestückung des Heizsystems 2 geöffnet.

Die im Verschwelungsprozess entstehenden Gase werden durch die vorgesehene Abgasleitung 11 aus dem Heizsystem 2 abgeführt und verfahrenstechnisch abgekühlt. Die Gase werden dabei durch den am obersten Punkt der Reaktionseinheit 4 ausgebildeten Abgasstutzen 10a sowie die im Kopfelement 7 angeordnete Abgasleitung zur Destillationseinheit 3 geleitet. Anschließend durchströmen die Gase die Abkühlstrecke 12 der Destillationseinheit 3. Die Abkühlstrecke ist nach den Figuren 1, 2a, 2b aus Rohren ausgebildet. Die zur Horizontalen geneigt angeordneten Rohre sind zur Vergrößerung der Wärmeübertragungsfläche und damit der Verbesserung des Wärmeüberganges mit Rippen versehen. Die Wärme wird dabei von den Gasen an die Umgebungsluft übertragen. Nach einer alternativen Ausgestaltung können die Gase innerhalb der Abkühlstrecke 12 auch mit einem anderen Fluid, zum Beispiel Wasser, gekühlt werden.
Die Abkühlstrecke 12 ist mit zwei parallel zueinander ausgerichteten Rohren ausgebildet. Die Gase werden vor dem Eintritt in die Abkühlstrecke 12 auf zwei Teilmassenströme aufgeteilt und nach dem Durchströmen der Abkühlstrecke 12 wieder vermischt.

Anschließend werden die Destillationsprodukte in den Öltank 13 eingeleitet. Im Öltank 13 setzt sich das aus dem Verschwelungsprozess und der nachfolgenden Destillation gewonnene Öl, welches in seiner Konsistenz und Zusammensetzung einem leichten Rohöl entspricht beziehungsweise den Zwischenprodukten der Rohölverarbeitung sehr ähnlich ist, ab. Der nicht kondensierbare Anteil des Gases wird vom Öltank 13 in den Gasfiltertank 14 überführt und im Gasfiltertank 14 gefiltert.

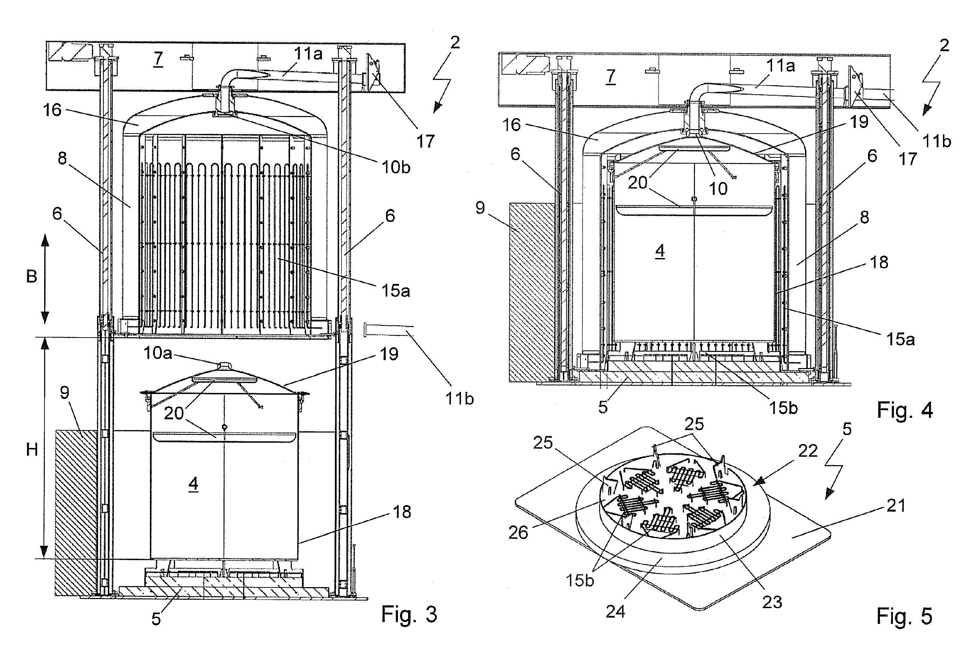

Die **Figuren 3 und 4** zeigen jeweils eine Schnittdarstellung des Heizsystems 2. In Figur 3 wird das Heizsystem 2 in geöffnetem Zustand und in Figur 4 in geschlossenem Zustand dargestellt.
Gemäß Figur 3 sind die Stützelemente 6 voll ausgefahren. Das an den oberen Enden der Stützelemente 6 angeordnete Kopfelement 7 und das mit dem Kopfelement 7 fest verbundene Mantelelement 8 sind dabei in einer Höhe H über dem Bodenelement 5 angeordnet, dass die Reaktionseinheit 4 zwischen dem Bodenelement 5 und dem Mantelelement 8 in horizontaler Richtung frei bewegbar ist.
Das Mantelelement 8 wird im unteren Bereich beweglich gegen die Stützelemente 6 abgestützt. Mittels der seitlichen Abstützung gegen die Stützelemente 6 wird eine gerade Bewegung des Mantelelementes 8 in Bewegungsrichtung B zwischen den Endpositionen gewährleistet. Eine Verkantung des Mantelelementes 8 wird vermieden.

Das Mantelelement 8 weist gleichmäßig am Umfang der inneren Fläche des Mantels verteilte Brennrohre 15a auf. Die Brennrohre 15a sind dabei im Wesentlichen in vertikaler Richtung angeordnet und werden im unteren Bereich des Mantelelementes 8 durch die Wandung zur Innenfläche geführt. Die Brennrohre 15a sind jeweils aus zwei senkrecht ausgerichteten Abschnitten ausgebildet, welche am oberen Ende mittels einer Umlenkung miteinander verbunden sind.

Das in vertikaler Richtung nach unten geöffnete Mantelelement 8 ist nach oben mit einer Haube 16 verschlossen und am Kopfelement 7 befestigt. Das Kopfelement 7 und das Mantelelement 8 bilden eine zusammenhängende Einheit. Die Haube 16 ist am Mittelpunkt mit einem Abgasstutzen 10b als Verbindung zur Abgasleitung 11 a ausgebildet. Die Abgasleitung 11 a erstreckt sich vom Abgasstutzen 10b durch die Haube 16 hindurch in das Kopfelement 7. Die Durchführung der Abgasleitung 11a durch die Haube 16 ist zur Haube 16 hin abgedichtet.
Die Abgasleitung 11a weist am, ausgehend vom Abgasstutzen 10b, distalen Ende ein Verbindungselement 17 auf. Das vorteilhaft als Schnellkupplung ausgebildete Verbindungselement 17 dient dabei der Verbindung der Abgasleitung 11a des Heizsystems 2 mit der Abgasleitung 11 b der Destillationseinheit 3 im geschlossenen Zustand des Heizsystems 2 gemäß Figur 4. Durch die Abwärtsbewegung des Kopfelementes 7 beim Verschließen des Heizsystems 2 werden die Abgasleitungen 11a, 11 b am Verbindungselement 17 sowie die Abgasstutzen 10a, 10b untereinander gekoppelt, sodass eine gasdichte Verbindung von der Reaktionseinheit 4 zur Destillationseinheit 3 hergestellt ist.

Die auf dem Bodenelement 5 angeordnete Reaktionseinheit 4 ist mit einer Wandung 18 in Form eines hohlzylindrischen Gefäßes mit einem Außendurchmesser von etwa 1,8 m ausgebildet, welche am Boden verschlossen ist. Die offene Seite der Wandung 18 ist mittels eines Deckelelementes 19 verschließbar. Zwischen der Wandung 18 und dem Deckelelement 19 ist eine Dichtung angeordnet, sodass die Reaktionseinheit 4 dicht verschlossen ist und mit dem Abgasstutzen 10a lediglich eine Öffnung aufweist. Im inneren der Reaktionseinheit 4 sind Siebelemente 20 ausgebildet. Die Siebelemente 20 sind dabei in horizontaler Richtung ausgerichtet und in unterschiedlichen Höhen, beabstandet zueinander angeordnet.

In der in Figur 4 gezeigten zweiten Endposition sind die Stützelemente 6 voll eingefahren. Das Mantelelement 8 sitzt auf dem Bodenelement 5 und umschließt die Reaktionseinheit 4 vollständig. Das Heizsystem 2 ist geschlossen.
Die mit Rohstoffen beschickte Reaktionseinheit 4 wird über den Boden und die Wandung 18 vorteilhaft gleichmäßig beheizt. Die Brennrohre 15a dienen dabei der Beheizung über die Wandung 18, während die am Bodenelement 5 angeordneten Brennrohre 15b der Reaktionseinheit 4 Wärme durch den Boden zuführen. Die am Umfang des Mantelelementes 8 ausgebildeten Brennrohre 15a weisen im geschlossenen Zustand des Heizsystems 2 gleiche Abstände zur Wandung 18 der Reaktionseinheit 4 auf.

Die Reaktionseinheit 4 verbleibt für eine Dauer in einem Bereich von etwa 2,5 h bis 3,5 h im Heizsystem 2, in welcher die hauptsächliche Reaktion und Umwandlung der Rohstoffe innerhalb der Reaktionseinheit 4 abläuft. Die Reaktionstemperatur innerhalb der Reaktionseinheit 4 beträgt je nach Beschickung und je nach zu erzeugenden Endprodukten zwischen 350°C und 650°C. Dabei wird eine Energie im Bereich von 40 kWh pro Stunde verbraucht. Die Reaktionseinheit 4 wird mit Rohstoffen einer Masse im Bereich von 2,5 t bis 3 t beschickt.

Die während des Verschwelungsprozesses entstehenden Gase werden durch den am Deckelelement 19 angeordneten Abgasstutzen 10 in die Abgasleitung 11 abgeführt. Im geschlossenen Zustand des Heizsystems 2 sind der Abgasstutzen 10a der Reaktionseinheit 4 und der Abgasstutzen 10b der Haube 16 des Mantelelementes 16 gasdicht miteinander verbunden. Damit wird sichergestellt, dass keine Gase in den Zwischenraum zwischen Reaktionseinheit 4 und Mantelelement 8 entweichen können.

In **Figur 5** ist das Bodenelement 5 des Heizsystems 2 dargestellt. Das Bodenelement 5 weist eine Bodenplatte 21 und eine Zentriervorrichtung 22 für das Mantelelement 8, Brennrohre 15b sowie Stützelemente 25 zur Halterung der Reaktionseinheit 4 auf. Das Bodenelement 5 ist im Wesentlichen aus Keramik ausgebildet, um eine Wärmeisolierung nach außen, insbesondere nach unten, sicherzustellen. In Kombination mit der Wärmeisolierung des Mantelelementes 8 wird damit der Wärmeverlust des Heizsystems 2 minimiert.

Die Reaktionseinheit 4 steht auf den Stützelementen 25 der Bodenplatte 21 auf. Die Stützelemente 25 sind dabei derart ausgebildet und angeordnet, dass die Reaktionseinheit 4 bei Auflage auf den Stützelementen 25 mittig zum Bodenelement 5 ausgerichtet ist.
Die Zentriervorrichtung 22 ist in Form einer kreisrunden Scheibe mit einem Absatz ausgebildet. Die Scheibe weist folglich zwei Bereiche mit unterschiedlichen Durchmessern auf. Die zwischen den Bereichen angeordnete Kreisfläche dient als Abdichtfläche 24.
Der äußere Umfang des Bereiches der Scheibe mit dem kleineren Durchmesser ist dabei geringer als der innere Umfang der Wandung 18 des Mantelelementes 8. Im geschlossenen Zustand des Heizsystems 2 ist zwischen der Mantelfläche 23 des Bereiches der Scheibe mit dem kleineren Durchmesser und der Innenseite der Wandung 18 ein Spalt ausgebildet. Das Mantelelement 8 steht auf der Abdichtfläche 24 der Bodenplatte 21 auf, sodass der vom Mantelelement 8 und der Bodenplatte 21 umschlossene Raum dicht verschlossen ist. Zur Abdichtung des umschlossenen Raumes sind an den korrespondieren Flächen der Bodenplatte 21 und des Mantelelementes 8 Dichtungen angeordnet. Zudem wird das Mantelelement 8 mit einem Druck im Bereich von 1 bar bis 2 bar auf die Abdichtfläche 24 der Bodenplatte 21 gedrückt und gehalten.

Da auch die Stützelemente 6 auf der Bodenplatte 21 befestigt sind, trägt die Bodenplatte 21 das gesamte Heizsystem 2.

Die Brennrohre 15b sind im Wesentlichen in horizontaler Richtung, auf der Abschlussfläche 26 der Zentriervorrichtung 22 und senkrecht durch die Abschlussfläche 26 geführt angeordnet. Die meanderförmig gebogen ausgebildeten Brennrohre 15b weisen jeweils die Form einer Hand mit fünf Fingern auf. Die Länge der Finger nimmt dabei von außen nach innen zu, sodass der mittlere Finger die größte Länge aufweist. Die Brennrohre 15b sind symmetrisch zueinander, mit den Spitzen der Finger zum Mittelpunkt der Abschlussfläche 26 weisend, ausgerichtet.
Die Stützelemente 25, auf denen die Reaktionseinheit 4 aufsteht, ragen in vertikaler Richtung über die Brennrohre 15b hinaus, sodass der auf den Stützelementen 25 aufstehende Boden der Reaktionseinheit 4 oberhalb der Brennrohre 15b angeordnet ist. Die Brennrohre 15b weisen jeweils den gleichen Abstand zum Boden der Reaktionseinheit 4 auf, um einen gleichmäßigen Wärmeeintrag durch den Boden der Reaktionseinheit 4 zu gewährleisten.
Die Zentriervorrichtung 22, die Stützelemente 25 und die Brennrohre 15b sind konzentrisch um den Mittelpunkt der Bodenplatte 21 angeordnet.

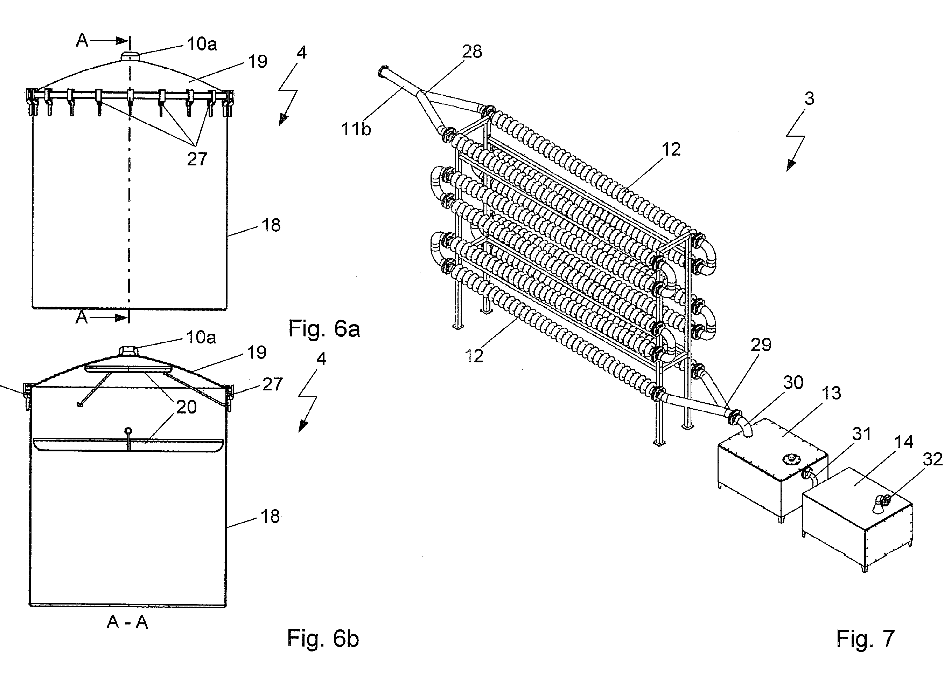

In den **Figuren 6a und 6b** ist jeweils die Reaktionseinheit 4 in geschlossenem Zustand dargestellt, wobei aus Figur 6b eine Schnittdarstellung der Reaktionseinheit 4 hervorgeht.

Die in Form eines hohlzylindrischen Gefäßes ausgebildete Wandung 18 mit verschlossenem Boden ist an der offenen, dem Boden gegenüberliegenden Seite mittels eines Deckelelementes 19 verschließbar. Das Deckelelement 19 wird mit Hilfe von Klemmvorrichtungen 27 an der Stirnseite der Wandung 18 lösbar befestigt.
Die als Schnellverschlüsse ausgebildeten Klemmvorrichtungen 27 werden zum Öffnen und/oder Verschließen der Reaktionseinheit 4 gelöst, sodass das Deckelelement 19 entfernt und die Reaktionseinheit 4 beschickt oder entleert werden kann.
Zwischen der Wandung 18 und dem Deckelelement 19 ist zum dichten Verschließen der Reaktionseinheit 4 eine hochtemperaturbeständige Dichtung angeordnet. Die Reaktionseinheit 4 weist im geschlossenen Zustand eine Höhe von etwa 2,4 m auf.

**Figur 7** zeigt die Destillationseinheit 3, aufweisend die Abgasleitung 11 b, die Abkühlstrecke 12 sowie den Öltank 13 und den Gasfiltertank 14 in der Reihenfolge der Durchströmungsrichtung der Endprodukte.
Die aus dem Heizsystem 2 abgeführten Gase werden durch die Abgasleitung 11 b zu den ebenfalls aus Rohren ausgebildeten Abkühlstrecken 12 geleitet. Dabei wird der Gasmassenstrom am Abzweig 28 in zwei Teilmassenströme durch zwei parallel zueinander ausgerichtete Rohre aufgeteilt. Die Aufteilung des Gasmassenstromes bewirkt eine bessere Wärmeübertragung vom Gasmassenstrom an die Umgebung, um den Vorgang der Destillation beziehungsweise Kondensation zu optimieren.
Die Rohre sind zur weiteren Verbesserung des Wärmeüberganges mit Rippen ausgebildet, um die Wärmeübertragungsflächen der Abkühlstrecken 12 zu vergrößern.
Nach dem Durchströmen der Abkühlstrecken 12 werden die vor dem Eintritt in die Abkühlstrecken 12 aufgeteilten Teilmassenströme an der Mündungsstelle 29 wieder vereint und durch den Eintrittsstutzen 30 von oben in den Öltank 13 eingeleitet.

Das im Gegensatz zum Gas eine größere Dichte aufweisende Öl setzt sich im Öltank 13 ab. Der nicht kondensierbare Anteil der Destillationsprodukte wird im oberen Bereich des Öltanks 13 durch den Austrittsstutzen 31 abgeführt und in den Gasfiltertank 14 eingeleitet. Das Gas wird im Gasfiltertank 14 gefiltert und anschließend durch den Austrittsstutzen 32 zur weiteren Verarbeitung entnommen.

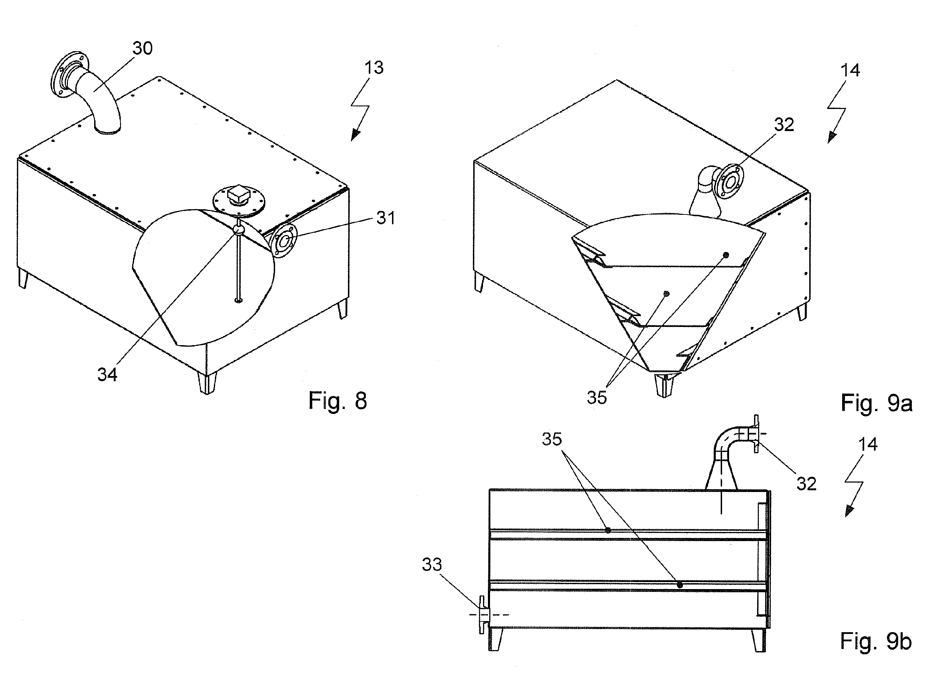

In **Figur 8** ist ein Öltank 13 mit aufgeschnittener Seitenfläche zum Einblick in das Innere dargestellt.
Der Eintrittsstutzen 30 ist auf der Oberseite des Öltanks 13 angeordnet, sodass die Destillationsprodukte von oben in den Öltank 13 einströmen. Das Öl setzt sich am Boden des Öltanks 13 ab, während sich die im Gegensatz zum Öl geringere Dichten aufweisenden Gase oberhalb des Ölspiegels konzentrieren. Der Ölspiegel beziehungsweise Ölstand im Öltank 13 wird mit einem Schwimmer 34 bestimmt und beobachtet. Bei Erreichen einer vorgegebenen Füllhöhe wird das Öl zur weiteren Verarbeitung aus dem Öltank 13 entnommen.
Die sich im oberen Bereich des Öltanks 13 ansammelnden Gase werden durch den Austrittsstutzen 31 abgeführt.

Die **Figuren 9a und 9b** zeigen einen Gasfiltertank 14. In Figur 9a ist der Gasfiltertank 14 mit aufgeschnittener Seitenfläche zum Einblick in das Innere und in Figur 9b eine Schnittdarstellung des Gasfiltertanks 14 dargestellt.
Der Eintrittsstutzen 33 ist im unteren Bereich einer Seitenfläche des Gasfiltertanks 14 angeordnet, sodass die Gase von unten in den Gasfiltertank 14 einströmen. Aufgrund ihrer geringen Dichte strömen die Gase anschließend von unten nach oben durch den Gasfiltertank 14 und werden beim Durchströmen von Lochblechen 35 gereinigt. Die Lochbleche 35 sind folglich derart ausgebildet, den Gasmassenstrom zu filtern, bevor dieser anschließend durch den Austrittsstutzen 32 aus dem Gasfiltertank 14 zur weiteren Verarbeitung ausströmt.

Der nicht kondensierbare Anteil der Gase und Anteile des gewonnenen Öls oder Anteile des gewonnenen Gases können zur Erzeugung der benötigten Prozesswärme genutzt werden, um den Prozess energetisch autark zu gestalten. Das Verfahren läuft dabei folglich ohne Ausstoß von Kohlenstoffdioxid ab. Lediglich der Anlauf des Prozesses ist mit Fremdenergie sicherzustellen. Die Erwärmung der Reaktionseinheit 4 kann wahlweise auch mit Stadtgas oder elektrisch erfolgen.

Die Reaktionseinheit 4 wird nach der Entnahme aus dem Heizsystem 2 auf die in Abhängigkeit von der Produktnutzung definierte Temperatur abgekühlt. Das sich im Inneren der Reaktionseinheit 4 befindliche Kohlenstoff-Eisen-Gemisch wird nach dem Öffnen der Reaktionseinheit 4, das heißt nach dem Abnehmen des Deckelelementes 19, entnommen. Danach wird die Reaktionseinheit 4 wieder dem Prozess zugeführt und beschickt. Das Kohlenstoff-Eisen-Gemisch wird in seine Bestandteile getrennt.

Am Verschwelungs-Destillations-Prozess zur stofflichen Behandlung der Rohstoffe sind gleichzeitig vier aus hochtemperaturbeständigem Stahl gefertigte Reaktionseinheiten 4 mit jeweils einer Füllmenge im Bereich von 2,5 t bis 3,5 t (75 % mechanisch, 25 % automatisiert) beteiligt. Während die erste Reaktionseinheit 4 beschickt wird, wird die zweite Reaktionseinheit 4, welche bereits beschickt ist, vorgewärmt. Die dritte Reaktionseinheit 4 ist währenddessen bereits dem Heizsystem 2 zugeführt und wird beheizt, sodass der eigentliche Verschwelungs-Destillations-Prozess abläuft. Die vierte Reaktionseinheit 4 wird unterdessen abgekühlt und anschließend entleert. Durch die Anwendung des modularen Systems, beispielsweise mit vier Reaktionseinheiten 4, kann schrittweise der Durchsatz erhöht und an den jeweiligen Bedarf flexibel angepasst werden. Der gesamte Prozess läuft quasikontinuierlich ab.

### LISTE DER BEZUGSZEICHEN

- 1: Vorrichtung zur stofflichen Behandlung
- 2: Heizsystem
- 3: Destillationseinheit
- 4: Reaktionseinheit
- 5: Bodenelement des Heizsystems 2
- 6: Stützelement
- 7: Kopfelement des Heizsystems 2
- 8: Mantelelement des Heizsystems 2
- 9: Umhausung
- 10, 10a, 10b: Abgasstutzen
- 11, 11a, 11b: Abgasleitung
- 12: Abkühlstrecke der Destillationseinheit 3
- 13: Öltank
- 14: Gasfiltertank
- 15a, 15b: Brennrohr
- 16: Haube
- 17: Verbindungselement der Abgasleitung 11
- 18: Wandung der Reaktionseinheit 4
- 19: Deckelelement
- 20: Siebelement
- 21: Bodenplatte
- 22: Zentriervorrichtung für Mantelelement 8
- 23: Mantelfläche der Zentriervorrichtung 23
- 24: Abdichtfläche der Zentriervorrichtung 23
- 25: Stützelement für Reaktionseinheit 4
- 26: Abschlussfläche
- 27: Klemmvorrichtung
- 28: Abzweig
- 29: Mündungsstelle
- 30: Eintrittsstutzen des Öltanks 13
- 31: Austrittsstutzen des Öltanks 13
- 32: Austrittsstutzen des Gasfiltertanks 14
- 33: Eintrittsstutzen des Gasfiltertanks 14
- 34: Schwimmer
- 35: Lochblech

- B: Bewegungsrichtung des Heizsystems 2
- H: Höhe

## Patentansprüche

1. Vorrichtung (1) zur stofflichen Behandlung von Rohstoffen, aufweisend ein Heizsystem (2), eine Destillationseinheit (3) und eine Reaktionseinheit (4), wobei
- die Reaktionseinheit (4) mit den Rohstoffen beschickbar ausgebildet ist, und
- das Heizsystem (2) zur Bestückung mit der Reaktionseinheit (4) öffenbar und verschließbar ausgebildet ist
**dadurch gekennzeichnet, dass** das Heizsystem (2) ein Kopfelement (7) und ein fest mit dem Kopfelement (7) verbunden ausgebildetes Mantelelement (8) sowie Stützelemente (6) umfasst, wobei das Kopfelement (7) an den in vertikaler Richtung in der Länge veränderbaren Stützelementen (6) gehaltert angeordnet ist, sodass durch die Veränderung der Länge der Stützelemente (6) zwischen zwei Endpositionen das Heizsystem (2) in vertikaler Bewegungsrichtung (B) geöffnet und geschlossen wird.

2. Vorrichtung (1) nach Anspruch 1, **dadurch gekennzeichnet, dass** das Heizsystem (2) zwei Stützelemente (6) aufweist, wobei die Stützelemente (6) beiderseits des Heizsystems (2) angeordnet sind.

3. Vorrichtung (1) nach Anspruch 1 oder 2, **dadurch gekennzeichnet, dass** das Mantelelement (8) eine hohlzylinderförmige Wandung aufweist, welche in vertikaler Richtung
- nach unten geöffnet und
- nach oben mit einer kreisrunden Haube (16) verschlossen und an der Haube (16) mit dem Kopfelement (7) verbunden
ausgebildet ist.

4. Vorrichtung (1) nach Anspruch 3, **dadurch gekennzeichnet, dass** die Haube (16) am Mittelpunkt mit einem Abgasstutzen (10b) als Verbindung zu einer Abgasleitung (11a) ausgebildet ist, wobei sich die Abgasleitung (11a) vom Abgasstutzen (10b) durch die Haube (16) hindurch in das Kopfelement (7) erstreckt.

5. Vorrichtung (1) nach einem der Ansprüche 1 bis 4, **dadurch gekennzeichnet, dass** die Reaktionseinheit (4) mit einer Wandung (18) in Form eines hohlzylindrischen Gefäßes, welches am Boden verschlossen ist, ausgebildet ist und die offene Seite der Wandung (18) mittels eines Deckelelementes (19) verschließbar ist.

6. Vorrichtung (1) nach Anspruch 5, **dadurch gekennzeichnet, dass** das Deckelelement (19) der Reaktionseinheit (4) kreisrund ausgebildet ist und am Mittelpunkt einen Abgasstutzen (10a) aufweist, wobei der Abgasstutzen (10a) des Deckelelementes (19) und der Abgasstutzen (10b) des Mantelelementes (8) im geschlossenen Zustand des Heizsystems (2) ineinander greifen und eine dichte Verbindung zur Abgasleitung (11a) ausbilden.

7. Vorrichtung (1) nach einem der Ansprüche 1 bis 6, **dadurch gekennzeichnet, dass** die Reaktionseinheit (4) Siebelemente (20) aufweist, wobei die Siebelemente (20) in horizontaler Richtung ausgerichtet und in unterschiedlichen Höhen, beabstandet zueinander angeordnet sind.

8. Verfahren zum Betreiben einer Vorrichtung zur stofflichen Behandlung von Rohstoffen nach einem der voranstehenden Ansprüche, umfassend folgende Schritte:
- Beschicken einer Reaktionseinheit (4) mit Rohstoffen,
- Vorwärmen der Reaktionseinheit (4),
- Öffnen eines Heizsystems (2) und Verbringen der Reaktionseinheit (4) auf ein Bodenelement (5) des Heizsystems (2),
- Verschließen des Heizsystems (2), sodass die Reaktionseinheit (4) in einem abgeschlossenen Raum angeordnet ist,
- Erwärmen der Reaktionseinheit (4) und Starten eines Verschwelungs- und Destillationsprozesses,
- Abführen entstehender Gase aus der Reaktionseinheit (4) in eine Destillationseinheit (3),
- Abkühlen und Kondensieren der Gase in der Destillationseinheit (3),
- Einleiten der Destillationsprodukte in einen Öltank (13) und Abscheiden von Öl,
- Überführen nichtkondensierbarer Gase vom Öltank (13) in einen Gasfiltertank (14) und Filtern der Gase,
- Öffnen des Heizsystems (2) und Entnehmen der Reaktionseinheit (4) aus dem Heizsystem (2),
- Abkühlen der Reaktionseinheit (4), Entnehmen der Endprodukte aus der Reaktionseinheit (4) und Trennen der Endprodukte sowie
- Entnehmen der Endprodukte aus dem Öltank (13) und dem Gasfiltertank (14), wobei das Heizsystem (2) durch Ausfahren und Einfahren von Stützelementen (6) geöffnet und geschlossen wird.

9. Verfahren nach Anspruch 8, **dadurch gekennzeichnet, dass** beim Verschließen des Heizsystems (2) Abgasstutzen (10a, 10b) der Reaktionseinheit (4) und einer Abgasleitung (11a) des Heizsystems (2) sowie die Abgasleitung (11a) des Heizsystems (2) und eine Abgasleitung (11b) der Destillationseinheit (3) an einem Verbindungselement (17) untereinander gekoppelt werden, sodass eine gasdichte Verbindung von der Reaktionseinheit (4) zur Destillationseinheit (3) hergestellt wird.

10. Verfahren nach Anspruch 8 oder 9, **dadurch gekennzeichnet, dass** das Verfahren mit mindestens vier Reaktionseinheiten (4) gleichzeitig und folgenden Schritten modular betrieben wird:
- Beschicken einer ersten Reaktionseinheit (4), während eine zweite Reaktionseinheit (4), welche bereits beschickt ist, vorgewärmt wird,
- Zuführen einer dritten, beschickten und vorgewärmten Reaktionseinheit (4) dem Heizsystem (2) und Erwärmen der Reaktionseinheit (4) zum Durchführen des Verschwelungs- und Destillationsprozesses sowie
- Abkühlen und Entleeren einer vierten Reaktionseinheit (4), in welcher der Verschwelungs- und Destillationsprozess beendet ist.

11. Verfahren nach einem der Ansprüche 8 bis 10, **dadurch gekennzeichnet, dass**
- die Reaktionseinheit (4) mit Rohstoffen einer Masse im Bereich von 2,5 t bis 3 t beschickt wird,
- die Reaktionseinheit (4) für eine Dauer in einem Bereich von 2,5 h bis 3,5 h im Heizsystem (2) verbleibt,
- die Reaktionstemperatur innerhalb der Reaktionseinheit (4) zwischen 350°C und 650°C beträgt und
- Energie im Bereich von 40 kWh pro Stunde verbraucht wird.

## Claims

1. An apparatus (1) for material treatment of raw materials, having a heating system (2), a distillation unit (3) and a reaction unit (4),
- the reaction unit (4) being designed such that it can be charged with the raw materials and
- the heating system (2) being designed such that it can be opened and closed for being fitted with the reaction unit (4),
**characterized in that** the heating system (2) comprises a top element (7) and a jacket element (8), firmly connected to the top element (7), and also supporting elements (6), the top element (7) being arranged in a secured manner on the supporting elements (6), which are variable in length in the vertical direction, so that, by varying the length of the supporting elements (6) between two end positions, the heating system (2) is opened and closed in a vertical direction of movement (B).

2. The apparatus (1) as claimed in claim 1, **characterized in that** the heating system (2) has two supporting elements (6), the supporting elements (6) being arranged on both sides of the heating system (2).

3. The apparatus (1) as claimed in claim 1 or 2, **characterized in that** the jacket element (8) has a hollow-cylindrical wall, which is designed such that, in the vertical direction, it is
- downwardly open and
- upwardly closed by a circular shroud (16) and connected at the shroud (16) to the top element (7).

4. The apparatus (1) as claimed in claim 3, **characterized in that** the shroud (16) is formed at the center point with an exhaust stub (10b) as a connection to an exhaust line (11a), the exhaust line (11a) extending from the exhaust stub (10b) through the shroud (16) into the top element (7).

5. The apparatus (1) as claimed in one of claims 1 to 4, **characterized in that** the reaction unit (4) is formed with a wall (18) in the form of a hollow-cylindrical vessel, which is closed at the bottom, and the open side of the wall (18) can be closed by means of a cover element (19).

6. The apparatus (1) as claimed in claim 5, **characterized in that** the cover element (19) of the reaction unit (4) is of a circular design and has at the center point an exhaust stub (10a), the exhaust stub (10a) of the cover element (19) and the exhaust stub (10b) of the jacket element (8) engaging in one another and forming a sealed connection with respect to the exhaust line (11a) in the closed state of the heating system (2).

7. The apparatus (1) as claimed in one of claims 1 to 6, **characterized in that** the reaction unit (4) has screening elements (20), the screening elements (20) being aligned in the horizontal direction and arranged at different heights, at a distance from one another.

8. A method for operating an apparatus for material treatment of raw materials as claimed in one of the preceding claims, comprising the following steps:
- charging a reaction unit (4) with raw materials,
- preheating the reaction unit (4),
- opening a heating system (2) and bringing the reaction unit (4) onto a bottom element (5) of the heating system (2),
- closing the heating system (2), so that the reaction unit (4) is arranged in a closed space,
- heating the reaction unit (4) and starting a low-temperature carbonization and distillation process,
- discharging gases produced from the reaction unit (4) into a distillation unit (3),
- cooling and condensing the gases in the distillation unit (3),
- introducing the distillation products into an oil tank (13) and separating oil,
- transferring non-condensable gases from the oil tank (13) into a gas filter tank (14) and filtering the gases,
- opening the heating system (2) and removing the reaction unit (4) from the heating system (2),
- cooling the reaction unit (4), removing the end products from the reaction unit (4) and separating the end products, and also
- removing the end products from the oil tank (13) and the gas filter tank (14),
the heating system (2) being opened and closed by extending and retracting supporting elements (6).

9. The method as claimed in claim 8, **characterized in that**, when closing the heating system (2), exhaust stubs (10a, 10b) of the reaction unit (4) and an exhaust line (11a) of the heating system (2) and also the exhaust line (11a) of the heating system (2) and an exhaust line (11b) of the distillation unit (3) are coupled together at a connecting element (17), so that a gastight connection of the reaction unit (4) to the distillation unit (3) is produced.

10. The method as claimed in claim 8 or 9, **characterized in that** the method is operated in a modular manner with at least four reaction units (4) at the same time and the following steps:
- charging a first reaction unit (4), while a second reaction unit (4) that has already been charged is preheated,
- feeding a third, charged and preheated reaction unit (4) to the heating system (2) and heating the reaction unit (4) for carrying out the low-temperature carbonization and distillation process, and also
- cooling and emptying a fourth reaction unit (4), in which the low-temperature carbonization and distillation process has ended.

11. The method as claimed in one of claims 8 to 10, **characterized in that**
- the reaction unit (4) is charged with raw materials of a mass in the range from 2.5 t to 3 t,
- the reaction unit (4) remains in the heating system (2) for a period in a range from 2.5 h to 3.5 h,
- the reaction temperature within the reaction unit (4) is between 350°C and 650°C and
- energy in the range of 40 kWh is consumed per hour.

## Revendications

1. Dispositif (1) pour le traitement matériel de matières premières, comportant un système de chauffage (2), une unité de distillation (3) et une unité de réaction (4), dans lequel
- l'unité de réaction (4) est formée de façon à pouvoir être alimentée avec les matières premières, et
- le système de chauffage (2) pour montage avec l'unité de réaction (4) est formé de façon à pouvoir s'ouvrir et se fermer
**caractérisé en ce que** le système de chauffage (2) comprend un élément de tête (7) et un élément enveloppant (8) fixé fermement à l'élément de tête (7) ainsi que des éléments d'appui (6) et que l'élément de tête (7) est disposé maintenu aux éléments d'appui (6) modifiables en longueur dans la direction verticale, de façon que la modification de la longueur des éléments d'appui (6) entre deux positions finales permette d'ouvrir et de fermer le système de chauffage (2) dans le sens de déplacement vertical (B).

2. Dispositif (1) selon la revendication 1, **caractérisé en ce que** le système de chauffage (2) présente deux éléments d'appui (6) et que les éléments d'appui (6) sont disposés des deux côtés du système de chauffage (2).

3. Dispositif (1) selon la revendication 1, **caractérisé en ce que** l'élément enveloppant (8) présente une paroi cylindrique creuse qui, en direction verticale, est
- ouverte vers le bas et
- fermée vers le haut avec un capot (16) circulaire et fixée au capot (16) avec l'élément de tête (7).

4. Dispositif (1) selon la revendication 3, **caractérisé en ce que** le capot (16) est formé au milieu avec une pipe d'échappement (10b) comme raccord avec un conduit d'échappement (11a) et que le conduit d'échappement (11a) va de la pipe d'échappement (10b) jusqu'à l'élément de tête (7) en passant par le capot (16).

5. Dispositif (1) selon l'une des revendications 1 à 4, **caractérisé en ce que** l'unité de réaction (4) est formée d'une paroi (18) en forme de récipient cylindrique creux fermé au sol et que le côté ouvert de la paroi (18) peut être fermée au moyen d'un élément de recouvrement (19).

6. Dispositif (1) selon la revendication 5, **caractérisé en ce que** l'élément de recouvrement (19) de l'unité de réaction (4) est circulaire et présente au milieu une pipe d'échappement (10a), et que la pipe d'échappement (10a) de l'élément de recouvrement (19) et la pipe d'échappement (10b) de l'élément enveloppant (8) s'emboîtent quand le système de chauffage (2) est fermé et forment un raccord étanche avec le conduit d'échappement (11a).

7. Dispositif (1) selon l'une des revendications 1 à 6, **caractérisé en ce que** l'unité de réaction (4) présente des éléments tamisants (20) et que les éléments tamisants (20) sont orientés à l'horizontale et disposés à différentes hauteurs et espacés les uns des autres.

8. Procédé destiné à faire fonctionner un dispositif pour le traitement matériel de matières premières selon l'une des revendications ci-avant, comprenant les étapes suivantes :
- alimentation d'une unité de réaction (4) en matières premières,
- préchauffage de l'unité de réaction (4),
- ouverture d'un système de chauffage (2) et placement de l'unité de réaction (4) sur un élément de fond (5) du système de chauffage (2),
- fermeture du système de chauffage (2) de façon que l'unité de réaction (4) soit disposée dans un espace fermé,
- chauffage de l'unité de réaction (4) et lancement d'un processus de carbonisation et distillation,
- évacuation des gaz produits de l'unité de réaction (4) vers une unité de distillation (3),
- refroidissement et condensation des gaz dans l'unité de distillation (3),
- déversement des produits de la distillation dans un réservoir d'huile (13) et séparation de l'huile,
- acheminement des gaz non condensables du réservoir d'huile (13) vers un réservoir à filtre à gaz (14) et filtration des gaz,
- ouverture du système de chauffage (2) et retrait de l'unité de réaction (4) du système de chauffage (2),
- refroidissement de l'unité de réaction (4), retrait des produits finaux de l'unité de réaction (4) et séparation des produits finaux et
- retrait des produits finaux du réservoir d'huile (13) et du réservoir à filtre à gaz (14), alors que le système de chauffage (2) s'ouvre et se ferme quand les éléments d'appui (6) sont déployés et rétractés.

9. Procédé selon la revendication 8, **caractérisé en ce que**, à la fermeture du système de chauffage (2), les pipes d'échappement (10a, 10b) de l'unité de réaction (4) et d'un conduit d'échappement (11a) du système de chauffage (2) ainsi que le conduit d'échappement (11a) du système de chauffage (2) et un conduit d'échappement (11 b) de l'unité de distillation (3) sont couplés les uns aux autres sur un élément de raccord (17) de façon à établir un raccord étanche au gaz entre l'unité de réaction (4) et l'unité de distillation (3).

10. Procédé selon la revendication 8 ou 9, **caractérisé en ce que** le procédé fonctionne avec au moins quatre unités de réaction (4) à la fois et avec les étapes suivantes de façon modulaire :
- alimentation d'une première unité de réaction (4) pendant qu'une deuxième unité de réaction (4), déjà alimentée, est préchauffée,
- insertion d'une troisième unité de réaction (4) alimentée et préchauffée dans le système de chauffage (2) et chauffage de l'unité de réaction (4) pour l'exécution du processus de carbonisation et distillation et
- refroidissement et vidage d'une quatrième unité de réaction (4) dans laquelle le processus de carbonisation et distillation est terminé.

11. Procédé selon l'une des revendications 8 à 10, **caractérisé en ce que**
- l'unité de réaction (4) est alimentée en matières premières d'une masse comprise entre 2,5 t et 3 t,
- l'unité de réaction (4) reste pour une durée d'environ 2,5 h à 3,5 h dans le système de chauffage (2),
- la température de réaction au sein de l'unité de réaction (4) est comprise entre 350 °C et 650 °C et
- l'énergie consommée est de l'ordre de 40 kWh par heure.
